# FASCICULE DE BREVET EUROPEEN

(11) **EP 3 019 771 B1**
(45) Date de publication et mention de la délivrance du brevet: **01.05.2019**
(21) Numéro de dépôt: 14749921.4
(22) Date de dépôt: 09.07.2014
(51) Int. Cl.: F16H 1/28, F16H 3/44

(54) **INTÉGRATION D'UN TRAIN D'ENGRENAGES DANS UN VOILE DE PIGNON DE BOÎTIER D'ENTRAÎNEMENT POUR TURBOMACHINE**
INTEGRATION EINES GETRIEBEZUGS IN EINE RITZELWAND IN EINEM GETRIEBE FÜR EINE TURBOMASCHINE
INCORPORATION OF A GEAR TRAIN IN A PINION WALL IN A GEARBOX FOR A TURBOMACHINE

(30) Priorité: 10.07.2013 FR 1356787
(43) Date de publication de la demande: 18.05.2016
(60) Demande divisionnaire: 19164261.0
(73) Titulaire: Safran Transmission Systems, 92700 Colombes (FR)
(72) Inventeur: PRUNERA-USACH, Stéphane, 77550 Moissy Cramayel (FR); BECK, Guillaume, F-60500 Chantilly (FR); PELTIER, Jordane, 77550 Moissy Cramayel (FR)
(74) Mandataire: Brevalex
(86) Numéro de dépôt international: PCT/FR2014/051760
(87) Numéro de publication internationale: WO 2015/004387

(56) Documents cités:
- EP-A2- 2 405 116
- US-A1- 2003 220 169
- US-A1- 2010 035 718
- US-A1- 2012 108 382
- US-A1- 2012 178 579

## Description

### DOMAINE TECHNIQUE ET ART ANTÉRIEUR

La présente invention se rapporte à des chaînes d'engrenages (ou chaîne d'entraînement) présentes dans les aéronefs.

Ces chaînes d'engrenages permettent de transmettre de l'énergie mécanique entre des organes moteurs, par exemple un démarreur ou un compresseur de turbomachine, et des organes esclaves par exemple des équipements de type générateur électrique ou pompe hydraulique, ou encore la turbomachine elle-même dans sa phase de démarrage, lorsqu'elle est entraînée en rotation par le démarreur. Le boîtier d'entraînement pour équipements ou encore AGB (de l'acronyme anglais « *Accessory Gearbox* ») est un exemple particulier de chaîne d'engrenages pour l'entraînement d'équipements. Une structure de boîtier d'entraînement pour équipements de ce type est décrite dans la demande de brevet américaine US 2012/0006137.

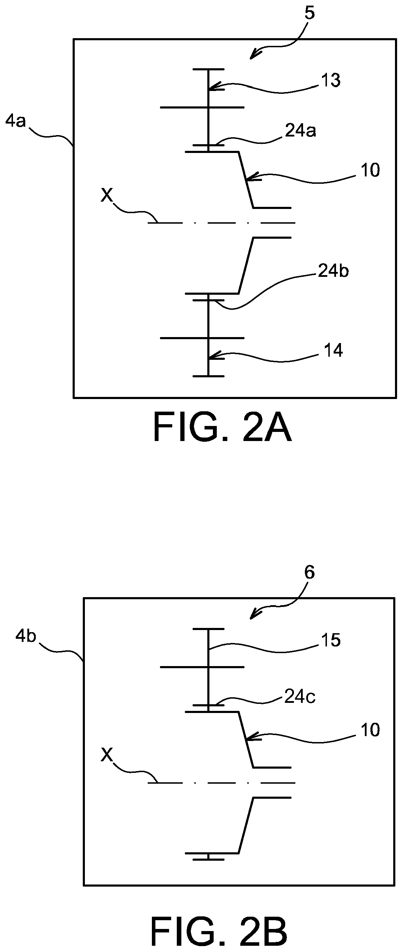

Le document US 2003/220169 décrit une chaîne d'entraînement adéquate pour aéronef comprenant une pluralité de pignons principaux engrenant les uns avec les autres (voir Figure 2), un premier pignon principal (50) comportant une paroi délimitant un volume intérieur, une denture extérieure (56) étant ménagée sur une surface extérieure de la paroi, la denture extérieure engrenant avec au moins un deuxième pignon principal (80), un système d'engrenages ("first to fifth stages") étant intégré dans le volume intérieur, le système d'engrenages comportant un organe formant couronne (50, 54, 56), une denture intérieure (54) étant ménagée sur une surface intérieure de l'organe formant couronne, le premier pignon principal et le système d'engrenages étant conjointement configurés pour former multiplicateur ou réducteur et pour assurer un transfert d'énergie mécanique entre un organe moteur et un organe esclave.

Une fonction multiplicatrice ou réductrice permet généralement d'adapter la vitesse de rotation du mouvement d'entrée aux paramètres spécifiques à chaque organe moteur ou organe esclave.

Par exemple, un démarreur comporte deux parties : un organe mobile nommé rouet, et un réducteur.

L'invention vise à proposer une structure de chaîne d'engrenages intégrant une telle fonction multiplicatrice ou réductrice, qui soit compacte pour limiter l'encombrement de la chaîne d'entraînement et/ou des équipements.

### EXPOSÉ DE L'INVENTION

Ainsi, l'invention porte sur une chaîne d'entraînement d'équipements pour turbomachine d'aéronef comprenant une pluralité de pignons principaux engrenant les uns avec les autres, un premier pignon principal comportant une paroi délimitant un volume intérieur, une denture extérieure étant ménagée sur une surface extérieure de la paroi, la denture extérieure engrenant avec au moins un deuxième pignon principal, un système d'engrenages étant intégré dans le volume intérieur, le premier pignon principal et le système d'engrenages étant conjointement configurés pour former multiplicateur ou réducteur et pour assurer un transfert d'énergie mécanique entre un organe moteur et un organe esclave.

Ainsi, l'invention permet d'intégrer une structure de multiplicateur (et/ou de réducteur) d'un organe moteur ou esclave d'aéronef dans un pignon de chaîne d'engrenages plutôt que dans l'organe lui-même. Ceci permet une réduction du volume de cet organe et de la masse qui se trouve en porte-à-faux. Il en résulte avantageusement d'une part une diminution des contraintes sur les brides de support de cet organe et d'autre part une optimisation du volume interne du module dans lequel la chaîne d'engrenages est montée.

La diminution du volume des équipements facilite l'intégration du boîtier d'entraînement pour équipements (AGB) dans la turbomachine.

Selon l'invention le système d'engrenages comporte un organe formant couronne, au moins deux pignons satellites, un organe formant porte-satellites et une denture solaire, la denture solaire étant ménagée sur un arbre relié à l'organe moteur ou à l'organe esclave, une denture intérieure étant ménagée sur une surface intérieure de l'organe formant couronne, les pignons satellites engrenant avec la denture intérieure et avec la denture solaire.

Selon l'invention l'organe formant couronne est la paroi du premier pignon principal, l'organe formant porte-satellites étant fixe par rapport à un bâti de l'aéronef.

Selon une caractéristique avantageuse, tous les engrenages du système d'engrenages sont agencés de manière à être traversés par un même plan médian P traversant la denture extérieure.

Selon des caractéristiques avantageuses alternatives, le système d'engrenages comporte au moins un pignon satellite ayant une première et une deuxième denture de diamètres différents.

Une telle double denture offre avantageusement une plage de rapports de transmission importante dans un encombrement minimal.

Selon une caractéristique avantageuse, une entrée de mouvement vers le premier pignon principal peut se faire par la denture extérieure.

Alternativement ou cumulativement, une entrée de mouvement vers le premier pignon principal se fait par l'arbre relié à l'organe moteur ou par un autre arbre relié au pignon et coaxial à l'arbre.

Selon une caractéristique particulière, le premier pignon principal fait partie d'un couple conique.

Il est par exemple possible que le premier pignon principal d'une AGB soit le pignon le plus proche de l'arbre de compresseur.

La chaîne d'entraînement décrite ci-dessus est par exemple destinée à un dispositif d'entraînement de type AGB.

L'invention peut également porter sur un boîtier d'entraînement pour équipements comportant une chaîne d'entraînement telle que décrite ci-dessus.

### BRÈVE DESCRIPTION DES DESSINS

On décrira à présent, à titre d'exemples non limitatifs, des modes de réalisation de l'invention, en se référant aux dessins annexés, dans lesquels :
- les figures 1A et 1B sont des coupes en perspective montrant d'une part un pignon présentant un logement interne, et d'autre part un dispositif mécanique combinant ce pignon et un multiplicateur intégré dans le logement interne (ici schématisé par un bloc) ;
- les figures 2A et 2B sont des schémas cinématiques illustrant deux possibilités d'intégration du pignon des figures 1A et 1B dans différentes chaînes d'engrenages à l'exemple de deux AGB, le multiplicateur n'étant pas représenté ;
- la figure 3 est une coupe en perspective d'un premier mode de réalisation du dispositif de la figure 1B selon un point de vue similaire, détaillant le multiplicateur intégré dans le logement interne du pignon ;
- la figure 4 est un schéma cinématique illustrant les interactions entre les éléments d'une variante du dispositif de la figure 3 ;
- la figure 5 est un schéma d'un pignon satellite double utilisable dans une autre variante du dispositif de la figure 3 ;
- la figure 6 est un schéma cinématique illustrant les interactions entre les éléments d'un deuxième mode de réalisation du dispositif de la figure 1B.

### EXPOSÉ DÉTAILLÉ DE MODES DE RÉALISATION PARTICULIERS

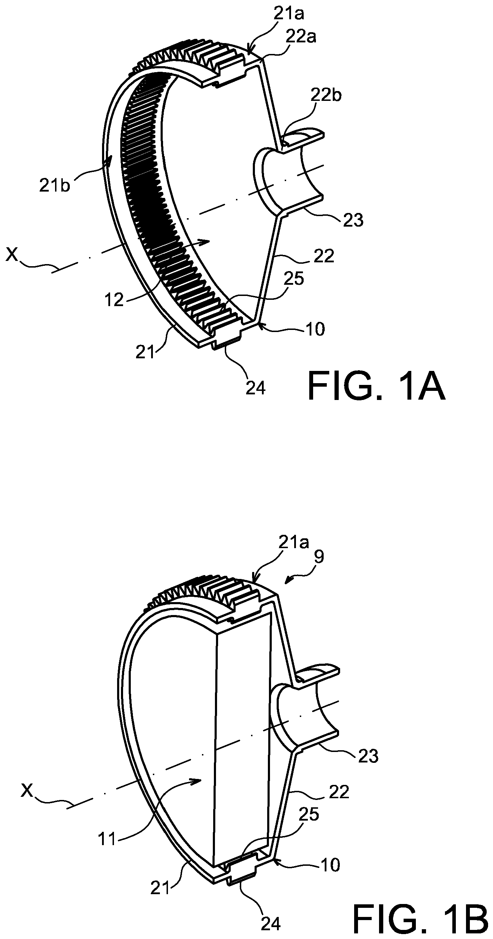

La figure 1A illustre un pignon 10, encore appelé roue dentée, de forme globale en entonnoir et d'orientation longitudinale X.

Dans une disposition particulière, le pignon 10 comporte une jante 21, un voile 22, un fût 23, une denture extérieure 24 et une denture intérieure 25.

La jante 21 et le fût 23 sont cylindriques, coaxiaux, le diamètre du fût 23 étant inférieur au diamètre de la jante 21. Le fût 23 est ici un arbre creux. Alternativement, le fût 23 est un arbre plein. Le voile 22 est ici de forme tronconique. Le voile 22 est rattaché par un premier bord circulaire 22a à un bord d'extrémité de la jante 21, et par un deuxième bord circulaire 22b, de diamètre inférieur au premier bord 22a, à un bord d'extrémité du fût 23. En variante non représentée, le voile 22 est plat. Le voile 22 peut aussi comporter des ouvertures sur une partie de sa surface.

La jante 21 et le voile 22 délimitent conjointement un logement interne 12.

La denture extérieure 24 s'étend radialement d'une surface externe 21a de la jante 21 vers l'extérieur. La denture 24 comporte ici des dents droites. Dans une variante non représentée, cette denture est hélicoïdale ou d'un autre type.

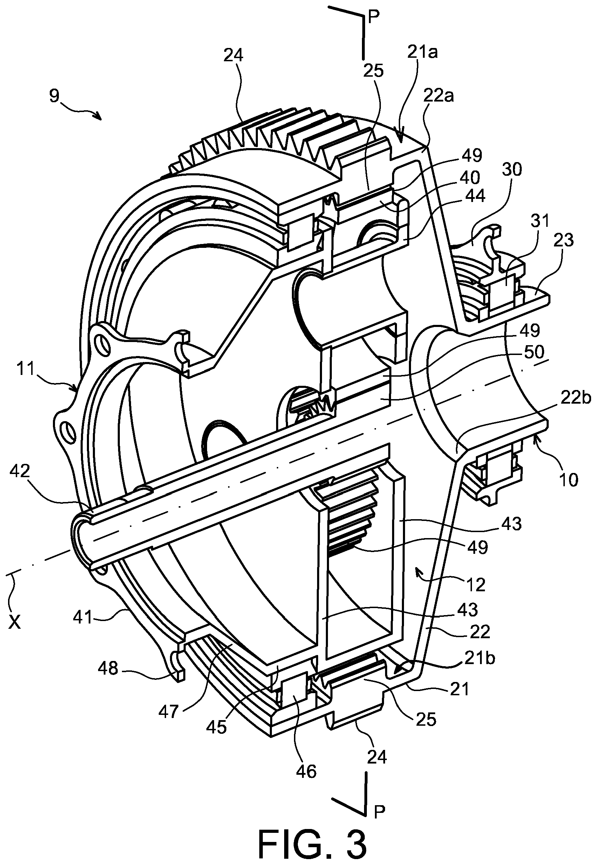

La denture intérieure 25 s'étend radialement d'une surface interne 21b de la jante 21 vers l'intérieur, c'est-à-dire dans le logement interne 12, ici à l'opposé de la denture 24. Dans l'exemple illustré en figures 1A, 1B et 3, la denture 25 comporte des dents droites. Dans une variante non représentée, cette denture est hélicoïdale ou d'un autre type.

La figure 1B illustre un dispositif mécanique 9 dans lequel un multiplicateur 11 est monté dans le logement interne 12 du pignon 10 décrit ci-dessus. En figure 1B, le multiplicateur 11 est représenté sous forme simplifiée, par un demi-cylindre.

Dans le dispositif 9 détaillé en figure 3, le multiplicateur 11 comporte des satellites 40 (ou pignons satellites), un porte-satellites 41 et un arbre 42.

Les satellites 40 sont ici des roues dentées à denture droite 49. Dans une variante non représentée, ces dentures sont hélicoïdales ou d'autres types. Les dentures 49 sont chacune engrenées avec la denture intérieure 25. Les satellites 40 sont ici au nombre de trois (dont seulement deux sont visibles en figure 3). Dans une variante non représentée, le nombre de satellites est différent de trois, par exemple deux ou quatre.

Ici, le porte-satellites 41 comporte deux parois 43, une portion cylindrique 45, une portion tronconique 47 et une bride 48.

Les parois 43 sont parallèles entre elles. Ces parois 43 supportent entre elles des arbres 44 sur lesquels sont montés les satellites 40, chacun assemblé mobile à rotation par l'intermédiaire d'un système non représenté de type roulement, palier ou autre.

La portion cylindrique 45 du porte-satellites 41 s'étend depuis la paroi 43 la plus éloignée du fût 23. Un palier 46, ici un roulement, assure une liaison mécanique à rotation entre la jante 21 du pignon 10 et la portion 45. Dans une version non représentée, ce guidage en rotation est assuré par un autre élément technologique tel qu'un palier.

La portion tronconique 47 s'étend en rétrécissant dans le prolongement de la portion cylindrique 45.

Enfin, la bride 48 du porte-satellites 41 est disposée à l'extrémité distale de la portion tronconique, transversalement à l'orientation longitudinale X. La bride 48 assure un maintien en position du multiplicateur 11 par rapport à une armature fixe (non représentée).

L'arbre 42 présente une denture droite 50 en une extrémité logée dans le porte-satellites 41. Dans une version non représentée cette denture est hélicoïdale ou d'un autre type. Cette denture 50 est engrenée avec la denture 49 de chacun des satellites 40. L'arbre 42 est ici prévu coaxial avec le fût 23 et la jante 21. La denture 50 est ici formée directement en extrémité de l'arbre 42. Alternativement, elle peut appartenir à un pignon (non illustré) monté sur l'extrémité correspondante de l'arbre 42.

Une bride 30, indépendante du multiplicateur 11 et du pignon 10, est montée sur le fût 23 par l'intermédiaire d'un palier 31, ici un roulement mais pouvant être d'un autre type tel qu'un palier. Cette bride 30 maintient en position le pignon 10 par rapport à une armature fixe (non représentée).

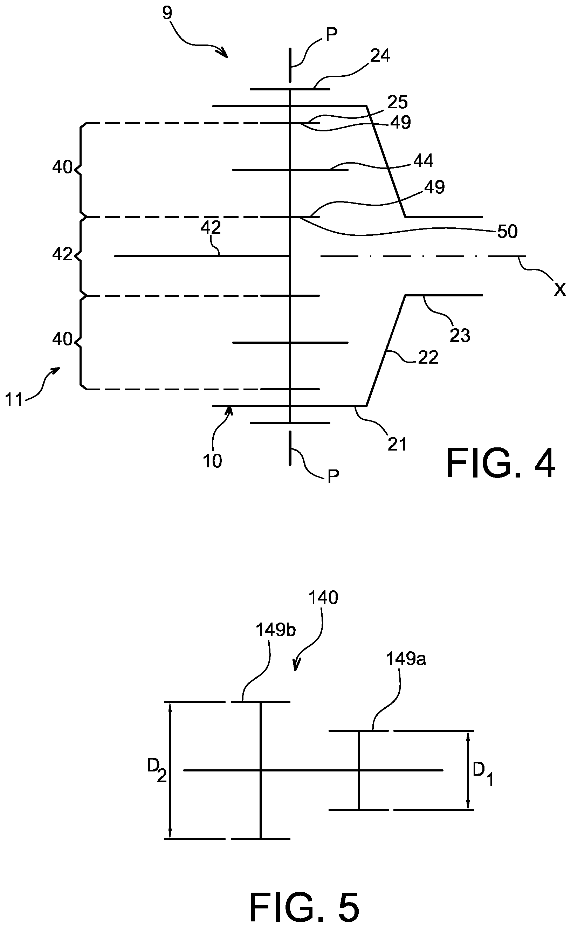

Le dispositif 9 représenté en figures 3 et 4 se présente sous forme d'un train planétaire simple dans lequel le pignon 10 joue le rôle de couronne mobile via la denture intérieure 25 et dans lequel la denture 50 disposée sur l'arbre 42 joue le rôle de planétaire intérieur mobile (ou solaire), le porte-satellite 41 étant fixé à une armature fixe. Le terme couronne (en anglais *annulus*) désigne un élément annulaire comportant une denture intérieure avec laquelle les pignons satellites engrènent.

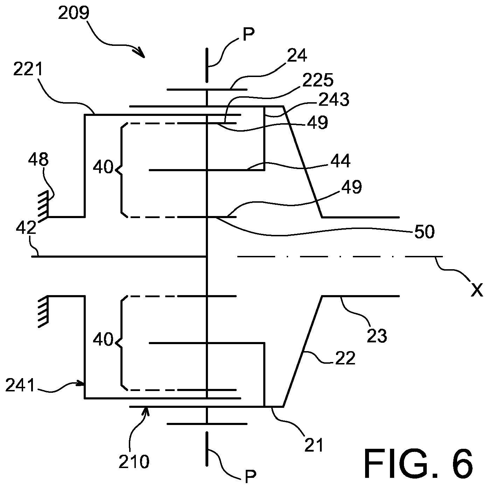

Un mode de réalisation 209 alternatif au dispositif 9 sera décrit plus loin en référence à la figure 6.

Comme il est visible aux figures 2A et 2B, le pignon 10 du dispositif 9 peut être intégré de différentes manières dans une chaîne d'engrenages ou chaîne d'entraînement (ou chaîne cinématique), à l'intérieur d'un boîtier d'entraînement pour équipements, tels que les boîtiers 4a et 4b décrits ci-après.

En figure 2A, le pignon 10 est monté dans une première chaine cinématique 5 d'un boîtier d'entraînement 4a (AGB). Plus précisément, le pignon 10 est engrené par sa denture 24 à la fois en amont en 24a avec une roue dentée 13 et en aval en 24b avec une roue dentée 14. Par le terme amont, on comprend que la roue dentée 13 est, au sein de la chaîne cinématique 5, la plus proche d'un arbre de compresseur de turbomachine depuis lequel il est possible de prélever un mouvement mécanique. La mise en rotation de la roue dentée 13 entraîne ainsi le pignon 10 et la roue dentée 14 montés en aval. L'entrée de mouvement ou de puissance vers le pignon 10 se fait alors par la denture extérieure 24.

En figure 2B, le pignon 10 est monté dans une deuxième chaîne cinématique 6 d'un boîtier d'entraînement 4b. Ici, le pignon 10 est engrené en 24c avec une roue dentée 15, en fin de chaîne cinématique 6.

En variante, l'entrée de mouvement dans le boîtier d'entraînement 4a depuis l'arbre de compresseur se fait par la denture extérieure 24 du pignon 10, c'est-à-dire que le pignon 10 apporte la puissance aux chaines d'engrenages 5 ou 6 comportant respectivement les pignons 13 et 14 (figure 2A) ou 15 (figure 2B).

Les exemples des figures 2A et 2B ne sont pas limitatifs et le pignon 10 peut être monté en différents emplacements dans une chaîne cinématique. De plus, le nombre de roues dentées dans la chaîne cinématique peut être différent de deux ou trois, par exemple mais non limitativement un, quatre ou cinq.

L'arbre 42 est relié opérationnellement à un organe moteur ou esclave non représenté situé en dehors du boîtier d'entraînement.

Lorsque l'entrée de mouvement vers le pignon 10 se fait par la denture extérieure 24, par exemple lorsque le mouvement provient du compresseur de turbomachine, comme décrit ci-dessus, le multiplicateur 11 permet d'alimenter l'équipement à une vitesse de rotation souhaitée.

En variante, l'équipement est remplacé par un organe moteur (par exemple un démarreur) qui entraine lui-même la chaîne cinématique de l'AGB. L'entrée de mouvement ou de puissance vers le pignon 10 se fait alors par l'arbre 42 relié à l'organe moteur, ou encore par l'arbre 23 solidaire de la jante 21 du pignon 10 et coaxial à l'arbre 42.

En variante non représentée, le pignon fait partie d'un couple conique et la denture extérieure est par exemple formée sur une jante conique ou tronconique. Le fût 23 peut être relié à un autre équipement non représenté situé en dehors du boîtier d'entraînement 4a ou 4b, à l'opposé de l'équipement relié à l'arbre 42.

Le dispositif 9 décrit ci-dessus, peut être utilisé aussi bien comme multiplicateur que comme réducteur selon que son entraînement en rotation se fait par le fût 23, la denture 24 ou l'arbre 42.

Une variante du dispositif 9 décrit ci-dessus est schématisée en figure 4. Dans cette vue, les satellites 40 sont au nombre de quatre (dont deux visibles dans le plan de coupe).

Dans les dispositifs 9 représentés en figures 3 et 4, toutes les dentures du multiplicateur 11 et du pignon 10 sont agencées dans un même plan médian P de la jante 21, le plan médian P étant transversal à la direction longitudinale X.

En variante, les dentures 24 et 25 sont arrangées en décalage l'une par rapport à l'autre, c'est-à-dire autrement qu'en vis-à-vis de part et d'autre de la jante 21.

Alternativement encore, il est possible de faire usage d'un train épicycloïdal double, c'est-à-dire comportant des satellites doubles 140 (voir figure 5), pour permettre un rapport de transmission différent, par exemple plus important. Dans ce cas, chaque satellite double 140 comporte deux dentures externes 149a et 149b : une première denture 149a qui est par exemple de diamètre D1 inférieur au diamètre D2 d'une deuxième denture 149b, la première denture 149a étant engrenée avec la denture 50, la deuxième denture étant engrenée avec la denture 25.

Le dispositif 209 schématisé en figure 6 est une alternative au dispositif 9 décrit en référence aux figures 3 et 4. Les parties communes aux dispositifs 9 et 209 portent les mêmes références et ne sont pas décrites de nouveau.

Le dispositif 209 comporte un pignon 210 et une couronne 241.

Le pignon 210 diffère du pignon 10 en ce qu'il ne porte pas sur sa jante 21 de denture intérieure opposée à la denture extérieure 24. En revanche, une paroi 243 est rattachée à la face intérieure de la jante 21. Les arbres 44 sont montés sur la paroi 243 et portent les pignons 40.

La couronne 241 présente une portion annulaire 221 coaxiale avec la jante 21 du pignon 210. Cette portion annulaire 221 porte une denture intérieure 225 qui engrène avec les dentures 49. La couronne 241 est ici fixée à une armature du boîtier d'entraînement fixe via une bride 48.

Le dispositif 209 représenté en figure 6 se présente sous forme d'un train épicycloïdal simple dans lequel le pignon 210 joue le rôle de porte-satellites mobile.

D'autres variantes de réalisation sont encore possibles sans sortir du cadre de l'invention. Par exemple, dans le mode de réalisation décrit en référence aux figures 3 et 4, il est possible d'intercaler un système de roue libre (par exemple du type roue à cliquet) entre la jante 21 et les satellites 40, la denture 25 étant alors ménagée sur un anneau interne du système de roue libre. De même, dans le mode de réalisation décrit en référence à la figure 6, il est possible d'intercaler un système de roue libre entre la jante 221 et les satellites 40.

En référence aux figures 2A et 2B, les chaînes d'engrenages 5 et 6 ont été décrites montées dans un boîtier d'entraînement pour équipements 4a ou 4b (ou AGB).

D'une manière générale, on comprendra que l'invention ne se limitera pas aux exemples de dispositifs décrits ci-dessus. L'invention peut s'appliquer à tout équipement entrainé par le boîtier d'entraînement et qui nécessite une fonction multiplicatrice ou réductrice spécifique.

## Revendications

1. Chaîne d'entraînement pour aéronef comprenant une pluralité de pignons principaux (10 ; 13, 14 ; 15) engrenant les uns avec les autres, un premier pignon principal (10) comportant une paroi (21, 22) délimitant un volume intérieur (12), une denture extérieure (24) étant ménagée sur une surface extérieure (21a) de la paroi (21, 22), la denture extérieure (24) engrenant avec au moins un deuxième pignon principal (13, 14 ; 15), un système d'engrenages (11) étant intégré dans le volume intérieur (12), le système d'engrenages (11) comportant un organe formant couronne (21, 22 ; 241), une denture intérieure (25 ; 225) étant ménagée sur une surface intérieure de l'organe formant couronne (21, 22 ; 241), le premier pignon principal (10) et le système d'engrenages (11) étant conjointement configurés pour former multiplicateur ou réducteur et pour assurer un transfert d'énergie mécanique entre un organe moteur et un organe esclave,
le système d'engrenages (11) comportant au moins deux pignons satellites (40), un organe formant porte-satellites (41 ; 243) et une denture solaire (50), la denture solaire (50) étant ménagée sur un arbre (42) relié à l'organe moteur ou à l'organe esclave, les pignons satellites (40) engrenant avec la denture intérieure (25 ; 225) et avec la denture solaire (50),
dans lequel l'organe formant couronne comporte la paroi (21, 22) du premier pignon principal (10), l'organe formant porte-satellites (41) étant fixe par rapport à un bâti de l'aéronef.

2. Chaîne d'entraînement selon la revendication 1, tous les engrenages du système d'engrenages (11) étant agencés de manière à être traversés par un même plan médian P traversant la denture extérieure (24).

3. Chaîne d'entraînement selon la revendication 1, le système d'engrenages (11) comportant au moins un pignon satellite (40) ayant une première (149a) et une deuxième denture (149b) de diamètres (D1, D2) différents.

4. Chaîne d'entraînement selon l'une des revendications 1 à 3, une entrée de mouvement vers le premier pignon principal (10) se faisant par la denture extérieure (24).

5. Chaîne d'entraînement selon l'une des revendications 1 à 3, une entrée de mouvement vers le premier pignon principal (10) se faisant par l'arbre (42) relié à l'organe moteur ou par un autre arbre (23) relié au pignon (10) et coaxial à l'arbre (42).

6. Chaîne d'entraînement selon l'une des revendications précédentes, le premier pignon principal (10) faisant partie d'un couple conique.

7. Chaîne d'entraînement selon l'une des revendications 1 à 6, destinée à un dispositif d'entraînement de type boîtier d'entraînement pour équipements (AGB).

8. Boîtier d'entraînement pour équipements (en anglais « AGB » ou « accessory gearbox ») comportant une chaîne d'entraînement selon l'une des revendications 1 à 6.

## Patentansprüche

1. Antriebskette für Luftfahrzeuge, bestehend aus einer Vielzahl an ineinander greifenden Hauptantriebsrädern (10, 13, 14, 15), einem ersten Hauptantriebsrad (10) mit einer Trennwand (21, 22), die einen Innenraum (12) begrenzt, einer Außenverzahnung (24), die auf einer Außenfläche (21a) der Trennwand (21, 22) ausgebildet ist, wobei die Außenverzahnung (24) in mindestens ein zweites Hauptantriebsrad (13, 14, 15) eingreift, einer in den Innenraum (12) integrierten Getriebeanordnung (11), wobei die Getriebeanordnung (11) ein Element umfasst, das einen Kranz bildet (21, 22, 241), einer Innenverzahnung (25, 225), die auf einer Innenfläche des Kranz-bildenden Elements (21, 22, 241) ausgebildet ist, wobei das erste Hauptantriebsrad (10) und die Getriebeanordnung (11) gemeinsam so konfiguriert sind, dass sie ein Übersetzungsgetriebe oder ein Untersetzungsgetriebe bilden und die Übertragung der mechanischen Energie zwischen einem Antriebselement und einem geführten Element gewährleisten,
wobei die Getriebeanordnung (11) mindestens zwei Planetenräder (40), ein als Planetenradträger fungierendes Element (41, 243) und eine Sonnenverzahnung (50) umfasst, wobei die Sonnenverzahnung (50) auf einer Welle (42) ausgebildet ist, die mit dem Antriebselement oder dem geführten Element verbunden ist, wobei die Planetenräder (40) in die Innenverzahnung (25, 225) und die Sonnenverzahnung (50) eingreifen,
wobei das Kranz-bildende Element die Trennwand (21, 22) des ersten Hauptantriebsrads (10) umfasst und das als Planetenradträger fungierende Element (41) in Bezug auf einen Rahmen des Luftfahrzeugs feststehend ist.

2. Antriebskette gemäß Anspruch 1, wobei alle Getriebe der Getriebeanordnung (11) so angeordnet sind, dass sie von der gleichen Mittelebene P durchquert werden, die die Außenverzahnung (24) durchquert.

3. Antriebskette gemäß Anspruch 1, wobei die Getriebeanordnung (11) mindestens ein Planetenrad (40) mit einer ersten (149a) und einer zweiten Verzahnung (149b) mit unterschiedlichen Durchmessern (D1, D2) umfasst.

4. Antriebskette gemäß einem der Ansprüche 1 bis 3, wobei eine Antriebsbewegung in Richtung des ersten Hauptantriebsrads (10) über die Außenverzahnung (24) erfolgt.

5. Antriebskette gemäß einem der Ansprüche 1 bis 3, wobei eine Antriebsbewegung in Richtung des ersten Hauptantriebsrads (10) über die Welle (42), die mit dem Antriebselement verbunden ist, oder über eine andere Welle (23) erfolgt, die mit dem Antriebsrad (10) verbunden ist und koaxial zur Welle (42) verläuft.

6. Antriebskette gemäß einem der vorgenannten Ansprüche, wobei das erste Hauptantriebsrad (10) Bestandteil eines Kegelradgetriebes ist.

7. Antriebskette gemäß einem der Ansprüche 1 bis 6, die als Antriebsvorrichtung vom Typ Getriebe für Hilfseinrichtungen (AGB) bestimmt ist.

8. Getriebe für Hilfseinrichtungen (auf Englisch "AGB" oder "Accessory Gearbox") mit einer Antriebskette gemäß einem der Ansprüche 1 bis 6.

## Claims

1. An aircraft drive chain comprising a plurality of main pinions (10; 13, 14; 15) meshing with each other, a first main pinion (10) including a wall (21, 22) delimiting an inner volume (12), external teeth (24) being provided on an outer surface (21a) of the wall (21, 22), the external teeth (24) meshing with at least one second main pinion (13, 14; 15), a gear system (11) being incorporated into the inner volume (12), the gear system (11) including an annulus member (21, 22; 241), an internal teeth (25; 225) being provided on an inner surface of the annulus member (21, 22; 241), the first main pinion (10) and the gear system (11) being jointly configured to form a multiplier or reducer and to ensure a mechanical energy transfer between a driving member and a slave member,
the gear system (11) including at least two planet pinions (40), a planet carrier member (41; 243) and sun teeth (50), the sun teeth (50) being provided on a shaft (42) connected to the driving member or to the slave member, the planet pinions (40) meshing with the internal teeth (25; 225) and with the sun teeth (50),
wherein the annulus member includes the wall (21, 22) of the first main pinion (10), the planet carrier member (41) being stationary with respect to an aircraft mountEP.

2. The drive chain according to claim 1, all the gears of the gear system (11) being arranged so as to be crossed by a same mid-plane P crossing the external teeth (24).

3. The drive chain according to claim 1, the gear system (11) including at least one planet pinion (40) having first (149a) and second (149b) teeth of different diameters (D1, D2).

4. The drive chain according to claim 1, a motion input towards the first main pinion (10) being made by the external teeth (24).

5. The drive chain according to any of claims 1 to 3, a motion input towards the first main pinion (10) being made through the shaft (42) connected to the driving member or through another shaft (23) connected to the pinion (10) and coaxial to the shaft (42).

6. The drive chain according to claim 1, the first main pinion (10) being part of a bevel gear.

7. The drive chain according to any of claims 1 to 6, for an accessory gearbox (AGB)-type driving device.

8. An accessory gearbox (AGB) including a drive chain according to one of claims 1 to 6.
